# EUROPÄISCHE PATENTSCHRIFT

(11) **EP 1 231 377 B1**
(45) Veröffentlichungstag und Bekanntmachung des Hinweises auf die Patenterteilung: **27.04.2005**
(21) Anmeldenummer: 02002803.1
(22) Anmeldetag: 07.02.2002
(51) Int. Cl.: F02M 37/22, B01D 35/027

(54) **Filter für Flüssigkeiten, insbesondere Kraftstoffe**
Filter for liquids, in particular fuels
Filtre pour liquides, en particulier carburants

(30) Priorität: 08.02.2001 DE 20102217 U
(43) Veröffentlichungstag der Anmeldung: 14.08.2002
(73) Patentinhaber: Filtertek, S.A., F-60128 Plailly (FR)
(72) Erfinder: Chiga, Antonio, 77230 Dammartin en Goele (FR)
(74) Vertreter: Brose, D. Karl, Dipl.-Ing.

(56) Entgegenhaltungen:
- DE-U- 29 812 483
- US-A- 4 617 121
- US-A- 5 055 187
- US-A- 5 665 229
- US-A- 5 795 468

## Beschreibung

Die Erfindung betrifft einen Filter für Flüssigkeiten, insbesondere Kraftstoffe, mit einem aus Kunststoff bestehenden Stützkörper, welcher ein Kunststoffgewebe stützt und dazu dient, die einander gegenüberliegenden Seiten des durch das Filtergewebe gebildeten Filterkörpers voneinander im Abstand zu halten, und mit einem auf der Außenseite des Filterkörpers angeordneten Pumpenanschlußstutzen, welcher im Inneren des Filterkörpers eine Zulauföffnung aufweist, wobei der Stützkörper vollständig von Filtergewebe umschlossen ist und lediglich über die Zulauföffnung und den Pumpenanschlußstutzen eine Verbindung nach außen aufweist, und wobei der Filter einen ersten, den Pumpenanschlußstutzen enthaltenden Teil und mindestens einen, in einem Winkel zu dem ersten Teil angeordneten zweiten Teil aufweist.

Ein Filter dieser Art ist gemäß einem früheren Vorschlag der Anmelderin aus dem DE-Gbm 298 12 483 bekannt. Bei diesem beikannten Filter bilden der erste Teil und der zweite Teil zusammen den Filterkörper, wobei die beiden Teile mittels eines Scharniers oder Gelenks miteinander verbunden sind, mittels dessen der zweite Teil gegenüber dem ersten Teil gemeinsam mit dem Filtergewebe aus einer geradlinig geschrägten Ausgangsform der beiden Teile in eine Winkelstellung klappbar und mittels einer Arretierungsvorrichtung in der Winkelstellung fixierbar ist. Filter dieser Art sollen eine besonders einfache Bauweise aufweisen und sind als Kraftstofffilter insbesondere für den Einbau in einen Kraftstoffvorratsbehälter von Fahrzeugen vorgesehen. Die Filterfunktion wird hierbei von dem Filtergewebe übernommen, wobei der Stützkörper dazu dient, die einander gegenüberliegenden Seiten des durch das Filtergewebe gebildeten Filterkörpers voneinander im Abstand zu halten, da sonst beide Seiten teilweise aneinander haften könnten, wodurch die zur Verfügung stehende Filterfläche verringert werden würde. Der oben beschriebene, nach einem früheren Vorschlag der Anmelderin bekannte Filter ermöglicht es, eine größtmögliche Filterfläche auf möglichst kleinem Raum zur Verfügung zu stellen, wobei insbesondere bei Kraftstofffiltern der bekannte Filter in einem möglichst kleinen Saugraum untergebracht werden kann, so dass ein vollständiges Entleeren des Kraftstoffs im Tank möglich ist. Durch die Bauweise, bei der die beiden Teile in einem Winkel, insbesondere in einem rechten Winkel zueinander stehen, wird erreicht, dass das Filter einen ausgesprochen geringen Raumbedarf trotz größter Filterfläche erfordert.

Ausgehend von dem bekannten Filter der eingangs genannten Art liegt der Erfindung die Aufgabe zugrunde, unter Beibehaltung sämtlicher Vorteile den Aufbau und die Konstruktion des Filters erheblich zu vereinfachen, so dass die Herstellkosten des Filters ebenfalls drastisch gesenkt werden können.

Diese Aufgabe wird bei einem Filter der eingangs genannten Art im wesentlichen dadurch gelöst, dass das erste Teil durch einen Rohrkörper gebildet ist, welcher an seinem ersten Ende den etwa im rechten Winkel zur Hauptachse des Rohrkörpers angeordneten Pumpenanschlußstutzen aufweist, und welcher an seinem zweiten Ende mit der axial verlaufenden Zulauföffnung versehen ist, dass der Rohrkörper dem Pumpenanschlußstutzen gegenüberliegend eine durch Filtergewebe überdeckte Ansaugöffnung aufweist, dass der aus dem Stützkörper und dem Filtergewebe bestehende Filterkörper den zweiten Teil des Filters bildet, und dass der Filterkörper in der gewählten Winkelstellung zu dem Rohrkörper fest mit diesem verbunden ist.

Es ist offensichtlich, dass bei der erfindungsgemäßen Bauart anstelle eines vergleichsweise aufwändigen Scharnierbereichs eine zweiteilige Bauform gewählt wurde, indem der erste Teil durch einen einfachen Rohrkörper gebildet ist, welcher fest mit dem eigentlichen Filterkörper, welcher den zweiten Teil des Filters bildet, in einer entsprechend den Einbauanforderungen gewählten Winkelstellung verbunden ist. Dennoch ermöglicht der einfache Rohrkörper ein nahezu vollständiges Entleeren des Tanks, indem die dem Pumpenanschlußstutzen gegenüberliegende Ansaugöffnung mit dem darin befestigten Filtergewebe ebenfalls einen Teil der Filterfunktion übernimmt. Darüber hinaus wird durch diese zusätzliche Ansaugöffnung der Ansaugweg des Filters auf nahezu ein Viertel verringert, wodurch beispielsweise ein Motor in der Startphase noch schneller anspringen kann. Ferner bietet diese zusätzliche Ansaugöffnung den Vorteil, den Tankinhalt bis auf die Höhe dieser Ansaugöffnung entleeren zu können.

Bei einer bevorzugten Ausführungsform nach der Erfindung weist die Ansaugöffnung mindestens den Querschnitt des Pumpen-Anschlußstutzens auf. Hierdurch werden strömungsgünstige Verhältnisse von der Ansaugöffnung zur Pumpe geschaffen.

Obwohl je nach Einsatzgebiet viele beliebige Querschnittsformen möglich sind, ist es bei dem Ausführungsbeispiel ferner bevorzugt, dass der Rohrkörper einen rechteckigen Querschnitt aufweist, was den Vorteil einer einfachen Ausbildung des Pumpenanschlußstutzens und einer eben verlaufenden Filterfläche in der Ansaugöffnung bietet.

Im einzelnen ist es ferner bevorzugt, dass der Stützkörper an das die eine Seite des Filterkörpers bildende Filtergewebe angespritzt ist. Hierdurch wird eine Vereinfachung der Herstellung des Filters möglich.

Hierbei ist es weiterhin bevorzugt, dass das die andere Seite des Filterkörpers bildende Filtergewebe nur über eine den Umfang des Filterkörpers teilweise oder vollständig bildende Schweißnaht mit dem die eine Seite des Filterkörpers bildenden Filtergewebe verbunden ist. Hierdurch ist eine weitere Vereinfachung des Herstellverfahrens möglich.

Eine besonders bevorzugte Ausführungsform nach der Erfindung kann dadurch geschaffen werden, dass der Rohrkörper an der Zulauföffnung eine diese umgebende Verstärkung aufweist, welche eine Innenschulter bildet, und dass sich ein Anschlußteil des Filterkörpers an der Innenschulter derart abstützt, dass der Strömungsquerschnitt in der Zulauföffnung unverändert bleibt.

Bevorzugt ist es hierbei, dass der Anschlußteil an der Zulauföffnung des Rohrkörpers durch Ultraschallschweißen oder dergleichen permanent befestigt ist.

Um die Herstellung weiter zu vereinfachen, weist die äußere Innenkante der Zulauföffnung bevorzugt eine Einlaufschräge auf.

Eine weitere, besonders bevorzugte Ausführungsform nach der Erfindung kann dadurch geschaffen werden, dass neben dem Pumpenanschlußstutzen auf der Außenseite des Rohrkörpers eine Klemmvorrichtung zur Befestigung des Filters an der Saugseite einer Pumpe vorgesehen ist.

Diese Klemmvorrichtung besteht bevorzugt aus einem einstückigen seitlichen Ansatz des Rohrkörpers und ist ferner insbesondere durch ein von einer nach unten gerichteten Schürze umgebendes Langloch gebildet, wobei die Schürze eine geringe Konizität aufweist.

Die Konizität beträgt bevorzugt etwa 3°. Diese bevorzugte Ausführungsform der Klemmvorrichtung bietet den Vorteil, dass sich hierdurch die Befestigung des Filters an der Saugseite einer Pumpe im Vergleich mit dem Stand der Technik erheblich vereinfachen läßt, indem, da der Rohrkörper mit dem Ansatz einstückig aus einem Kunststoff besteht, die federnden Eigenschaften der konisch ausgebildeten Schürze ausreichen, um den Filter sicher an dem Pumpenanschluß auf der Saugseite der Pumpe zu befestigen, indem das Langloch einfach über einen Dorn oder dergleichen an der Pumpe geschoben wird. Bei bekannten Konstruktionen war es bisher erforderlich, eine Tasche auszubilden, in welcher ein Metallclip eingelegt wurde, der weiterhin durch einen zusätzlichen Arbeitsgang gegen Herausfallen gesichert werden mußte.

Im folgenden wird die Erfindung anhand einer in den Zeichnungen beispielhaft veranschaulichten Ausführungsform näher erläutert. Es zeigt:
**FIG. 1** eine seitliche, teilweise schematische Schnittansicht einer praktischen Ausführungsform des Filters nach der Erfindung;
**FIG. 2** eine Unteransicht des Filters gemäß Fig. 1, wobei das Filtergewebe geschnitten dargestellt ist;
**FIG. 3** eine Vorderansicht des Filters gemäß Fig. 1;

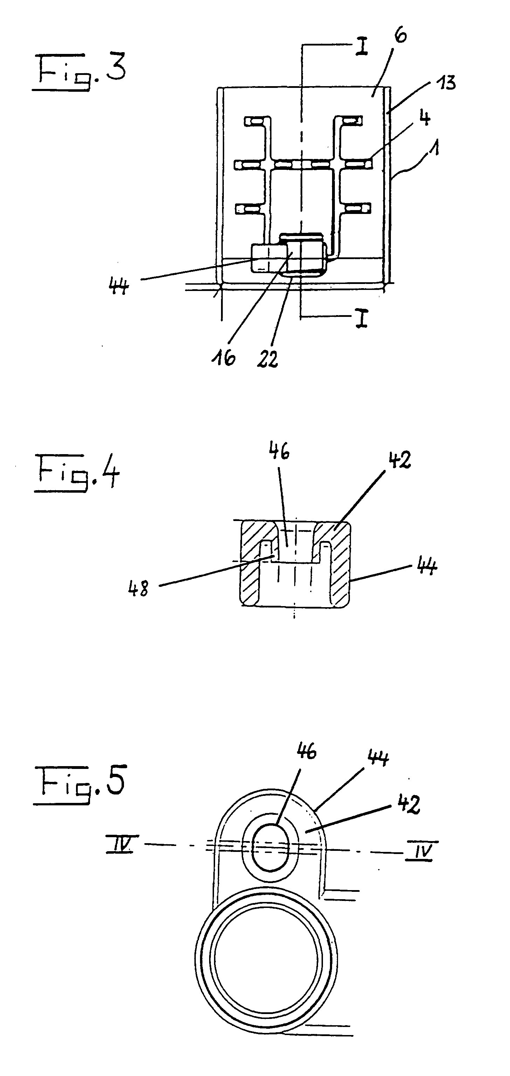

**FIG. 4** eine Schnittansicht längs der Linie IV-IV von Fig. 5 der Klemmeinrichtung des Filters gemäß Fig. 1 bis 3 im vergrößerten Maßstab und
**FIG. 5** eine Draufsicht auf den Bereich der Klemmeinrichtung gemäß Fig. 4, ebenfalls im vergrößerten Maßstab.

Der in den Zeichnungen gezeigte Filter 1 für Flüssigkeiten, insbesondere Kraftstoffe, besteht in allen Einzelteilen aus einem für diesen Zweck geeigneten Kunststoff. Der Filter 1 enthält einen Stützkörper 4, welcher ein Kunststoffgewebe oder Filtergewebe 6 abstützt, um die einander gegenüberliegenden Seiten 8 und 10 eines durch das Filtergewebe 6 gebildeten Filterkörpers voneinander im Abstand zuhalten, um zu verhindern, dass das Filter 1 im Betrieb zusammenfällt.

Auf der Außenseite des Filters ist ein Pumpenanschlußstutzen 14 üblicher Bauart vorgesehen, welcher im Inneren des durch das Filtergewebe 6 und den Stützkörper 4 gebildeten Filterkörpers 12 eine Zulauföffnung 16 aufweist.

Der Stützkörper 4 ist vollständig von dem Filtergewebe 6 eingeschlossen und steht lediglich über die Zulauföffnung 16 und den Pumpenanschlußstutzen 14 mit der Außenseite des Filters 1 in Verbindung.

Wie gezeigt, ist der Filter 1 aus zwei, beim Ausführungsbeispiel im rechten Winkel zueinander stehenden Teilen 18 und 20 aufgebaut, wobei der erste Teil 18 den Pumpenanschlußstutzen 14 und der zweite Teil 20 den Stützkörper 4 enthält.

Erfindungsgemäß ist der erste Teil 18 durch einen einstückig mit dem Pumpenanschlußstutzen 14 ausgebildeten Rohrkörper 22 gebildet. Der Rohrkörper 22 weist, wie sich aus der Ansicht gemäß Figur 3 ergibt, einen rechteckigen Querschnitt auf. An seinem ersten Ende 24 des Rohrkörpers 22 ist der etwa im rechten Winkel zur Hauptachse des Rohrkörpers 22 stehende Pumpenanschlußstutzen 14 ausgebildet. An seinem zweiten Ende 26 ist der Rohrkörper 22 mit der axial verlaufenden Zulauföffnung 16 versehen, an welcher, wie weiter unten noch näher erläutert wird, der Filterkörper 12 befestigt ist.

Ferner ist der Rohrkörper 22 dem Pumpenanschlußstutzen 14 unmittelbar gegenüberliegend mit einer Ansaugöffnung 28 versehen, welche durch Filtergewebe 30 überdeckt ist. Die Ansaugöffnung 28 kann jede beliebige Form aufweisen, ist jedoch im vorliegenden Fall zweckmäßigerweise ebenfalls kreisförmig entsprechend dem Querschnitt des Pumpenanschlußstutzens 14 ausgebildet und weist bevorzugt mindestens den gleichen Querschnitt wie der Pumpenanschlußstutzen 14 auf.

Bei dem in den Zeichnungen dargestellten Ausführungsbeispiel bildet der aus dem Stützkörper 4 und dem Filtergewebe 6 bestehende Filterkörper 12 den zweiten Teil des Filters 1, welcher in der gewünschten Winkelstellung zu dem Rohrkörper 22 fest mit dem Rohrkörper 22 verbunden ist.

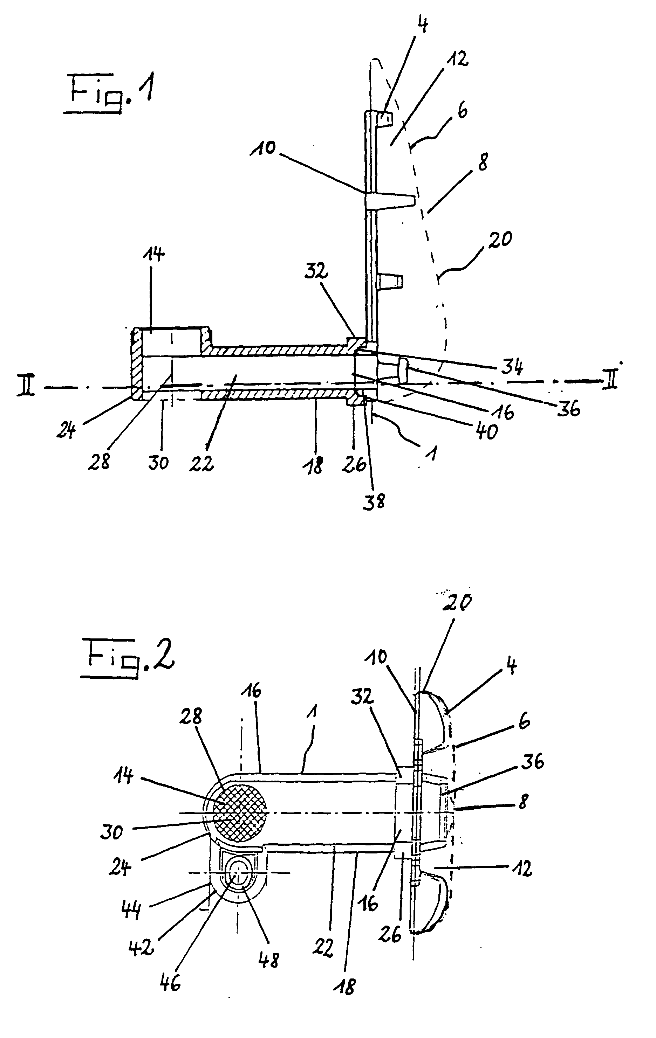

Wie ferner aus den Figuren 1 bis 3 ersichtlich, ist der Stützkörper 4 bei der Herstellung des Filterkörpers 12 an das die in Figur 1 gezeigte linke Wandung, d.h. die eine Seite 10 des Filterkörpers 12 bildende Filtergewebe 6, angespritzt, wobei die gegenüberliegende Wandung, d.h. die andere Seite 8 des Filterkörpers 12, dadurch geformt wird, dass Filtergewebe 6 oberhalb des Stützkörpers nach unten gefaltet wird, und an den Rändern durch die in Figur 3 gezeigte Schweißnaht 13 verschweißt wird. Bei dem veranschaulichten Ausführungsbeispiel ist folglich das die andere Seite 8 des Filterkörpers 12 bildende Filtergewebe 6 nur über die drei Seitenkanten des Filterkörpers 12 umfahrende Schweißnaht 13 mit dem die gegenüberliegende Seite 10 des Filterkörpers 12 bildenden Filtergewebe 6 verbunden.

Wie aus der Schnittansicht gemäß Figur 1 ersichtlich, ist der Rohrkörper 22 an der Zulauföffnung 16 mit einer die Zulauföffnung 16 umgebenden Verstärkung 32 versehen, welche eine Innenschulter 34 bildet. An der Innenschulter 34 stützt sich ein Anschlußteil 36 des Filterkörpers 12 ab, welcher mit dem Stützkörper 4 einstückig ausgebildet und ebenfalls an die Seite 10 des Filtergewebes 6 des Filterkörpers 12 angespritzt ist. Die Abmessungen sind hierbei derart gewählt, dass die Verbindung zwischen dem Anschlußteil 36 und dem Rohrkörper 22 derart ist, dass der Strömungsquerschnitt in der Zulauföffnung 16 unverändert bleibt.

Der Anschlußteil 36 ist an der Zulauföffnung 16 des Rohrkörpers 22 durch Ultraschallschweißen oder äquivalente Mittel permanent befestigt. Die gewünschte Winkelstellung zwischen dem ersten Teil 18 und dem zweiten Teil 20 des Filters 1 wird folglich durch entsprechende Gestaltung des Anschlußteils 36 während der Herstellung entsprechend der Geometrie des beabsichtigten Einsatzortes des Filters 1 gewählt.

Zur Erleichterung der Montage ist ferner die äußere Innenkante 38 der Zulauföffnung 36 mit einer Einlaufschräge 40 versehen.

Um den Filter 1 über den Pumpenanschlußstutzen 14 mit der Saugseite einer nicht dargestellten Kraftstofffördereinrichtung zu verbinden, ist bei dem veranschaulichten Ausführungsbeispiel eine besonders gestaltete Klemmvorrichtung 42 vorgesehen, welche in einem einstückigen seitlichen Ansatz 44 des Rohrkörpers 22 ausgebildet ist. Die Klemmvorrichtung 42 besteht aus einem von einer nach unten gerichteten Schürze 48 umgebenden Langloch 46, wobei die Schürze 48 eine geringe Konizität nach unten aufweist, welche beim Ausführungsbeispiel etwa 3° beträgt. Wird das Langloch 46 mit der Schürze 48 auf einen an der Kraftstofffördereinrichtung vorgesehenen Dorn aufgeschoben, so wird über die Konizität der Schürze 48 eine ausgesprochen sichere kraftschlüssige Verbindung in einfachster Weise hergestellt. Da derartige Filter im praktischen Einsatz mit der Kraftstofffördereinrichtung eine Baueinheit bilden, welche im Inneren eines ebenfalls nicht gezeigten Kraftstoffvorratsbehälters des Kraftfahrzeuges angeordnet wird, stellt eine derartige sichere Verbindung einen erheblichen Vorteil dar.

Sämtliche aus der Beschreibung, den Ansprüchen und Zeichnungen hervorgehenen Merkmale und Vorteile der Erfindung, einschliesslich konstruktiver Einzelheiten und räumlicher Anordnungen, können sowohl für sich als auch in beliebiger Kombination erfindungswesentlich sein.

### BEZUGSZEICHENLISTE

- 1 =: Filter
- 4 =: Stützkörper
- 6 =: Kunststoffgewebe/Filtergewebe
- 8 =: Seite von 12
- 10 =: Seite von 12
- 12 =: Filterkörper
- 13 =: Schweißnaht
- 14 =: Pumpenanschlußstutzen
- 16 =: Zulauföffnung
- 18 =: erster Teil
- 20 =: zweiter Teil
- 22 =: Rohrkörper
- 24 =: erstes Ende von 22
- 26 =: zweites Ende von 22
- 28 =: Ansaugöffnung
- 30 =: Filtergewebe in 28
- 32 =: Verstärkung
- 34 =: Innenschulter
- 36 =: Anschlußteil
- 38 =: Innenkante von 16
- 40 =: Einlaufschräge
- 42 =: Klemmvorrichtung
- 44 =: Ansatz an 22
- 46 =: Langloch
- 48 =: Schürze

## Patentansprüche

1. Filter (1) für Flüssigkeiten, insbesondere Kraftstoffe, mit einem aus Kunststoff bestehenden Stützkörper (1), welcher ein Kunststoffgewebe stützt und dazu dient, die einander gegenüberliegenden Seiten (8, 10) des durch das Filtergewebe (6) gebildeten Filterkörpers (12) voneinander im Abstand zu halten, und mit einem auf der Außenseite des Filterkörpers (12) angeordneten Pumpenanschlußstutzen, (14) welcher im Inneren des Filterkörpers (12) eine Zulauföffnung (16) aufweist, wobei der Stützkörper (4) vollständig von Filtergewebe (6) umschlossen ist und lediglich über die Zulauföffnung (16) und den Pumpenanschlußstutzen (14) eine Verbindung nach außen aufweist, und wobei der Filter (1) einen ersten, den Pumpenanschlußstutzen enthaltenden Teil (18) und mindestens einen, in einem Winkel zu dem ersten Teil angeordneten zweiten Teil (20) aufweist, **dadurch gekennzeichnet, dass** der erste Teil (18) durch einen Rohrkörper (22) gebildet ist, welcher an seinem ersten Ende (24) den etwa im rechten Winkel zur Hauptachse des Rohrkörpers (22) angeordneten Pumpenanschlußstutzen (14) aufweist, und welcher an seinem zweiten Ende (26) mit der axial verlaufenden Zulauföffnung (16) versehen ist, dass der Rohrkörper (22) dem Pumpenanschlußstutzen (14) gegenüberliegend eine durch Filtergewebe (30) überdeckte Ansaugöffnung (28) aufweist, dass der aus dem Stützkörper (4) und dem Filtergewebe (6) bestehende Filterkörper (12) den zweiten Teil (20) des Filters (1) gebildet, und dass der Filterkörper (12) in der gewählten Winkelstellung zu dem Rohrkörper (22) fest mit diesem verbunden ist.

2. Filter nach Anspruch 1, **dadurch gekennzeichnet, dass** die Ansaugöffnung (28) mindestens den Querschnitt des Pumpenanschlußstutzens (14) aufweist.

3. Filter nach Anspruch 1 oder 2, **dadurch gekennzeichnet, dass** der Rohrkörper (22) einen rechteckigen Querschnitt aufweist.

4. Filter nach einem der vorstehenden Ansprüche, **dadurch gekennzeichnet, dass** der Stützkörper (4) an das die eine Seite (10) des Filterkörpers (12) bildende Filtergewebe (6) eingespritzt ist.

5. Filter nach Anspruch 4, **dadurch gekennzeichnet, dass** das die andere Seite (8) des Filterkörpers (12) bildende Filtergewebe (6) nur über eine den Umfang des Filterkörpers (12) teilweise oder vollständig bildende Schweißnaht (13) mit dem die eine Seite (10) des Filterkörpers (12) bildenden Filtergewebe (6) verbunden ist.

6. Filter nach einem der vorstehenden Ansprüche, **dadurch gekennzeichnet, dass** der Rohrkörper (22) an der Zulauföffnung (16) eine, diese umgebende Verstärkung (32) aufweist, welche eine Innenschulter (34) bildet, und dass sich ein Anschlußteil (36) des Filterkörpers (12) an der Innenschulter (34) derart abstützt, dass der Strömungsquerschnitt in der Zulauföffnung (16) unverändert bleibt.

7. Filter nach Anspruch 6, **dadurch gekennzeichnet, dass** der Anschlußteil (36) an der Zulauföffnung (16) des Rohrkörpers (22) durch Ultraschallschweißen oder dergleichen permanent befestigt ist.

8. Filter nach Anspruch 6 oder 7, **dadurch gekennzeichnet, dass** die äußere Innenkante (38) der Zulauföffnung (16) eine Einlaufschräge (40) aufweist.

9. Filter nach einem der vorstehenden Ansprüche, **dadurch gekennzeichnet, dass** neben dem Pumpenanschlußstutzen (14) auf der Außenseite des Rohrkörpers (22) eine Klemmvorrichtung (42) zur Befestigung des Filters an der Saugseite einer Pumpe vorgesehen ist.

10. Filter nach Anspruch 9, **dadurch gekennzeichnet, dass** die Klemmvorrichtung (42) in einem einstückigen seitlichen Ansatz (44) des Rohrkörpers (22) ausgebildet ist.

11. Filter nach Anspruch 10, **dadurch gekennzeichnet, dass** die Klemmvorrichtung (42) aus einem von einer nach unten gerichteten Schürze (48) umgebenen Langloch (46) besteht, wobei die Schürze (48) eine geringe Konizität aufweist.

12. Filter nach Anspruch 11, **dadurch gekennzeichnet, dass** die Konizität der Schürze (48) etwa 3° beträgt.

## Claims

1. Filter (1) for fluids, especially fuels, having a supporting body (4) consisting of plastics supporting a plastics fabric and serving to keep the opposite sides (8, 10) of the filter body (12) formed by the filter mesh (6) in a distance from another and having a pump connection neck (14) provided on the exterior of the filter body (12), which, in the interior of the filter body (12), is having an inlet opening (16), wherein the supporting body (4) completely is enclosed in the filter mesh (6) and is having a connection to the exterior merely by the inlet opening (16) and the pump connection neck (14) and, wherein the filter (1) is having a first part (18) containing the pump connection neck and at least one second part (20) positioned in an angle with respect to the first part, **characterised in that** the first part (18) is formed by a tubular body (22), which, at its first end (24), is having the pump connection neck (14) positioned in a substantially right angle with respect to the main axis of the tubular body (22) and, which, at its second end (26), is having the axially extending inlet opening (16), **in that** the tubular body (22) opposite to the pump connection neck (14) is having an intake opening (28) covered by filter mesh (30), **in that** the filter body (12) consisting of the supporting body (14) and the filter mesh (6) is forming the second part (20) of the filter (1) and, **in that** the filter body (22) is fixedly connected with the tubular body (26) in the chosen angular position with respect to the same.

2. Filter according to claim 1, **characterised in that** the intake opening (28) at least is having the cross-section of the pump connection neck (14).

3. Filter according to claim 1 or 2, **characterised in that** the tubular body (22) is having a rectangular cross-section.

4. Filter according to any of the preceding claims, **characterised in that** the supporting body (4) is injection moulded onto the filter mesh (6) forming one side (10) of the filter body (12).

5. Filter according to claim 4, **characterised in that** the filter mesh (6) forming the other side (8) of the filter body (12) is connected with the filter mesh (6) forming the first side (10) of the filter body (12) only by a weld (13) forming the circumference of the filter body (12) partly or completely.

6. Filter according to any of the preceding claims, **characterised in that** the tubular body (22) at the inlet opening (16) is having a reinforcement (32) surrounding the same, which is forming an interior shoulder (34) and, **in that** a connection piece (36) of the filter body (12) is abutting the interior shoulder (34) such that the free cross-section of flow in the inlet opening (16) is unchanged.

7. Filter according to claim 6, **characterised in that** the connection piece (36) is permanently fixed at the inlet opening (16) of the tubular body (22) by ultrasonic welding or the like.

8. Filter according to claim 6 or 7, **characterised in that** the outer interior edge (38) of the inlet opening (16) is having an inlet bevel (40).

9. Filter according to any of the preceding claims, **characterised in that** on the exterior of the tubular body (22) next to the pump connection neck (14) there is provided a clamping device (32) for mounting the filter on the suction side of a pump.

10. Filter according to claim 9, **characterised in that** the clamping device (42) is formed by a unitary lateral projection (44) of the tubular body (22).

11. Filter according to claim 10, **characterised in that** the clamping device (22) is consisting of a slot (46) surrounded by a downwardly extending skirt (48), wherein the skirt (48) is having a slight conicity.

12. Filter according to claim 11, **characterised in that** the conicity of the skirt (48) is about 3°.

## Revendications

1. Filtre (1) pour liquides, en particulier carburants, comportant un corps de soutien (4) en matière plastique, qui soutient un tissu synthétique et sert à maintenir à distance l'un de l'autre les côtés (8, 10) opposés du corps de filtre (12) formé par le tissu filtrant (6), et comportant une tubulure de raccord de pompe (14) disposée sur le côté extérieur du corps de filtre (12), laquelle présente à l'intérieur du corps de filtre (12) une ouverture d'arrivée (16), le corps de soutien (4) étant entièrement enfermé par le tissu filtrant (6) et présentant une liaison vers l'extérieur uniquement par l'ouverture d'arrivée (16) et la tubulure de raccord de pompe (14), et le filtre (1) comportant une première partie (18) contenant la tubulure de raccord de pompe et au moins une deuxième partie (20) disposée suivant un angle par rapport à la première partie, **caractérisé en ce que** la première partie (18) est formée par un corps tubulaire (22) qui comporte, à sa première extrémité (24), la tubulure de raccord de pompe (14) disposée à peu près à angle droit par rapport à l'axe principal du corps tubulaire (22), et qui est pourvu, à sa deuxième extrémité (26), de l'ouverture d'arrivée (16) s'étendant axialement, **en ce que** le corps tubulaire (22) présente, à l'opposé de la tubulure de raccord de pompe (14), une ouverture d'aspiration (28) recouverte par un tissu filtrant (30), **en ce que** le corps de filtre (12), constitué du corps de soutien (4) et du tissu filtrant (6), forme la deuxième partie (20) du filtre (1), et **en ce que** dans la position angulaire choisie par rapport au corps tubulaire (22), le corps de filtre (12) est relié de manière fixe à celui-ci.

2. Filtre selon la revendication 1, **caractérisé en ce que** l'ouverture d'aspiration (28) présente au moins la section transversale de la tubulure de raccord de pompe (14).

3. Filtre selon la revendication 1 ou 2, **caractérisé en ce que** le corps tubulaire (22) présente une section transversale rectangulaire.

4. Filtre selon l'une des revendications précédentes, **caractérisé en ce que** le corps de soutien (4) est injecté sur le tissu filtrant (6) formant un côté (10) du corps de filtre (12).

5. Filtre selon la revendication 4, **caractérisé en ce que** le tissu filtrant (6), formant l'autre côté (8) du corps de filtre (12), n'est relié au tissu filtrant (6) formant un côté (10) du corps de filtre (12), que par un cordon de soudure (13) formant partiellement ou totalement le pourtour du corps de filtre (12).

6. Filtre selon l'une des revendications précédentes, **caractérisé en ce que** le corps tubulaire (22) présente, au droit de l'ouverture d'arrivée (16), un renfort (32) entourant celle-ci, qui forme un épaulement intérieur (34), et **en ce qu'**une pièce de raccord (36) du corps de filtre (12) prend appui contre l'épaulement intérieur (34) de manière que la section d'écoulement reste inchangée dans l'ouverture d'arrivée (16).

7. Filtre selon la revendication 6, **caractérisé en ce que** la pièce de raccord (36) est fixée de manière permanente à l'ouverture d'arrivée (16) du corps tubulaire (22) par soudage aux ultrasons ou de manière similaire.

8. Filtre selon la revendication 6 ou 7, **caractérisé en ce que** le bord interne (38) extérieur de l'ouverture d'arrivée (16) présente un chanfrein d'entrée (40).

9. Filtre selon l'une des revendications précédentes, **caractérisé en ce qu'**il est prévu sur le côté extérieur du corps tubulaire (22), outre la tubulure de raccord de pompe (14), un dispositif de serrage (42) pour la fixation du filtre sur le côté aspiration d'une pompe.

10. Filtre selon la revendication 9, **caractérisé en ce que** le dispositif de serrage (42) est réalisé dans un appendice (44) latéral d'un seul tenant du corps tubulaire (22).

11. Filtre selon la revendication 10, **caractérisé en ce que** le dispositif de serrage (42) est constitué d'un trou oblong (46) entouré par un tablier (48) dirigé vers le bas, le tablier (48) présentant une légère conicité.

12. Filtre selon la revendication 11, **caractérisé en ce que** la conicité du tablier (48) est d'environ 3°.
